# EUROPEAN PATENT SPECIFICATION

(11) **EP 0 315 462 B1**
(45) Date of publication and mention of the grant of the patent: **12.01.1994**
(21) Application number: 88310384.8
(22) Date of filing: 04.11.1988
(51) Int. Cl.: G21F 9/16

(54) **Method of solidification and encapsulation using core-shell polymer particles**
Verfahren zur Verfestigung und Einbettung mittels Kern-Schale-Polymerpartikeln
Méthode de solidification et d'encapsulation utilisant des particules de polymère coeur-coquille

(30) Priority: 06.11.1987 US 118102
(43) Date of publication of application: 10.05.1989
(73) Proprietor: ROHM AND HAAS COMPANY, Philadelphia Pennsylvania 19105 (US)
(72) Inventor: Blankenship, Robert Mitcheli, Harleysville Pennsylvania 19438 (US); Neyhart, Clarence Jay, Harleysville Pennsylvania 19438 (US); Novak, Ronald William, Chalfont Pennsylvania 18914 (US)
(74) Representative: Tanner, James Percival

(56) References cited:
- EP-A- 0 094 008
- US-A- 4 382 026
- JAPANESE PATENT OFFICE, FILE SUPPLIER JAPS, Tokyo, JP; & JP-A-61 239198

## Description

The invention relates to a method of solidification or encapsulation of compositions containing a substantially continuous aqueous phase such as slurries of ion exchange resins, cements, clays, pigments and other dissolved or suspended materials. These compositions can be completely solidified according to the invention for effective disposal. Biologically-active and chemically-active materials also can be encapsulated for controlled release. The method can be used for drying aqueous-based coatings and adhesives.

US-A-4,077,901 discloses a method for encapsulating liquid or finely-divided solid waste by uniformly dispersing the waste in a liquid thermosettable polymer composition and thereafter curing the waste/polymer under thermal and catalytic conditions. US-A-4,119,560 discloses a method of treating radioactive waste by introducing the waste solution in a hot, inert, liquid carrier, flashing off the volatile solvents, and coalescing the solid waste particles with a polymeric binder which cures at ambient or elevated temperatures. US-A-4382,026 describes a process for encapsulating radioactive organic liquids by contact with insoluble, swellable polymer particles and subsequently a curable liquid resin which is cured to a solid state. US-A-4,530,723 teaches a method of encapsulation of ion exchange resins by mixing with 1) boric acid or nitrate or sulfate salts, 2) a fouling agent and basic accelerator, and 3) cement. Further, US-A-4,530,783 describes solidification of radioactive wastes using a composition comprising unsaturated polyesters. All of the above methods are greatly limited in the amount of liquid material which can be solidified or encapsulated by a given amount of solidifier or encapsulant (i.e. typically in the range of about 1:1 to about 2:1 parts by weight liquid material to solidifier or encapsulant).

US-A-4,427,836 and 4,468,498 disclose core-sheath polymers which are swellable by bases and useful as opacifying or thickening agents in water-based coating compositions.

The invention provides a method of solidifying or encapsulating a waste composition containing a substantially continuous aqueous phase and dissolved or suspended materials, comprising uniformly incorporating into the composition polymer particles having a core component and a shell component, wherein a) the core component is an emulsion polymer of a monoethylenically unsaturated core monomer, at least 5% by weight of the core monomer having a carboxylic acid group, b) the shell component is an emulsion polymer prepared by polymerizing in the presence of the core component a monoethylenically unsaturated shell monomer, less than 10% by weight of the shell monomers having a carboxylic acid group, c) the shell component has a glass transition temperature from -40°C to 100°C, and the amount of the shell monomer having a carboxylic acid group is less than one third of the amount thereof in the core monomer, d) the weight ratio of the core component to the shell component is from 1:3 to 1:20, and e) the shell component is permeable to organic or inorganic bases; and neutralizing the polymer particles by incorporating into the composition an organic or inorganic base to swell the polymer particles and to absorb into the polymer particles substantially all the aqueous phase.

Suitable core-shell polymers can be prepared by a multistage, sequential, emulsion polymerization process such as described in the above mentioned US-A-4,427,836.

While the core may be made in a single stage or step of the sequential polymerization and the shell may be the product of a single sequential stage or step following the core stage, nevertheless, the making of the core component may involve a plurality of steps in sequence followed by the making of the shell which may involve a series of sequential steps as well.

Thus, the first stage of emulsion polymerization in the process of the present invention may be the preparation of a seed polymer containing small dispersed polymer particles insoluble in the aqueous emulsion polymerization medium. This seed polymer may or may not contain any acid component but provides particles of extremely small size which form the nuclei on which the core polymer of acid monomer, with or without nonionic comonomer(s), is formed.

As is common to aqueous emulsion polymers, there is used a water-soluble free radical initiator, such as hydrogen peroxide, tert-butyl peroxide, or an alkali metal (sodium, potassium or lithium) or ammonium persulfate or a mixture of such an initiator with a reducing agent, such as a sulfite, (more specifically an alkali metal metabisulfite, hydrosulfite, or hyposulfite, or sodium formaldehyde sulfoxylate) to form a redox system. The amount of initiator may be from 0.01 to about 2% by weight of the monomer charged and in a redox system, a corresponding range (0.01 to about 2%) of reducing agent may be used. The temperature may be in the range of about 10°C to 100°C. In the case of the persulfate systems, the temperature is preferably in the range of 60°C to 90°C. In the redox system, the temperature is preferably in the range of 30°C to 70°C, preferably 30°C to 60°C, more preferably in the range of 30°C to 45°C. The proportion of emulsifier may be zero, in the situation wherein a persulfate initiator is used, to about 0.3 weight percent based on the weight of monomer charged to the first stage of polymerization.

Any nonionic or anionic emulsifier may be used, either alone or together. Examples of the nonionic type of emulsifier include tert-octylphenoxyethylpoly(39)-ethoxyethanol, and nonylphenoxyethylpoly(40)-ethoxyethanol. Examples of anionic emulsifiers include sodium lauryl sulfate, sodium dodecyl benzene sulfonate, and tertoctylphenoxyethoxypoly(39)ethoxyethyl sulfate.

The molecular weight of the polymer formed in a given stage may range from 100,000, or lower if a chain transfer agent is used, to several million. The acid-containing core polymer, whether obtained by a single stage process or a process involving several stages, has an average size of about 0.05 to about 1.0., preferably 0.1 to 0.5, more preferably 0.2 to 0.5 micron diameter in unswollen condition. If the core is obtained from a seed polymer, the seed polymer may have an average size in the range of 0.03 to 0.2 micron diameter.

Examples of suitable monoethylenically unsaturated monomer include styrene, vinyl toluene, ethylene, vinyl acetate, vinyl chloride, vinylidene chloride, acrylonitrile, acrylamide, methacrylamide, and various (C₁-C₂₀)alkyl or (C₃-C₂₀)alkenyl esters of acrylic or methacrylic acid, such as methyl methacrylate, methyl acrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, palmityl acrylate, palmityl methacrylate, stearyl acrylate, and stearyl methacrylate. Examples of suitable monomers containing a carboxylic acid group include acrylic acid, methacrylic acid, itaconic acid, aconitic acid, maleic acid, maleic anhydride, fumaric acid, crotonic acid, acryloxypropionic acid, methacryloxy-propionic acid, acryloxy acetic acid, methacrylic anhydride, methacryloxyacetic acid, monomethyl acid maleate, monomethyl acid itaconate, and monomethyl fumarate. A mixture of two or more of each may be used.

It is preferred that at least 10% by weight of the core monomers have a carboxylic acid group, more preferably at least 30%. The preferred core monomers having a carboxylic acid group are acrylic acid, methacrylic acid, acryloxypropionic acid methacryloxypropionic acid, acryloxyacetic acid, methacryloxacetic acid, monomethyl acid maleate, monomethyl acid itaconate, crotonic acid, aconitic acid, maleic acid, maleic anhydride, fumaric acid and monomethyl fumarate. The most preferred acid-containing core monomer is methacrylic acid.

After the acid core is obtained, the subsequent stage or stages of emulsion polymerization to form a shell polymer may be performed in the same reaction vessel, or the reaction medium containing the dispersed core particles may be transferred to another reaction container. It is generally unnecessary to add emulsifier unless a polymodal product is desired, but in certain monomer/emulsifier systems for forming the shell, the tendency to produce gum or coagulum in the reaction medium may be reduced or prevented by the addition of about from 0.05 to 0.5% by weight, based on shell monomer weight, of emulsifier without detriment to the deposition of the shell polymer on the core particles.

The monomers used to form the shell polymer on the acid core particles may be any of the monoethylenically unsaturated comonomers mentioned hereinbefore for the making of the core. The monomers used and the relative proportions thereof in any copolymers formed should be such that the shell thereby formed is permeable to organic or inorganic bases. In spite of their hydrophobicity, the extremely non-polar or low-polar monomers (namely, styrene, alpha-methyl styrene, vinyl toluene, ethylene, vinyl chloride and vinylidene chloride) are useful alone (except in the first stage of shell formation) or in admixture with more highly polar monomers, such as vinyl acetate. Monomeric mixtures for making the shell preferably contain less than 10%, more preferably less than 5%, by weight of monomers having a carboxylic acid group. However, the proportion of acid in the shell polymer should not exceed one-third the proportion thereof in the core polymer. The content of acid monomers serves either or both of two functions; namely, stabilization of the final sequential polymer dispersion and assuring permeability of the shell to a base swellant.

The amount of polymer forming the shell component is generally such as to provide an overall size of the core-shell polymer of about from 0.07 to 4.5 microns (preferably from 0.1 to 3.5 microns and more preferably from 0.2 to 2.0 microns) in unswollen condition before any neutralization to raise the pH to about 6 or higher. In the unswollen, unneutralized state, the weight ratio of core polymer to the shell polymer is from about 1:3 to about 1:20, preferably from 1:4 to 1:10.

The core-shell polymer particles are swollen when the particles are subjected to an organic or inorganic base that permeates the shell and expands the core. The neutralization with base thus causes the swollen core-shell polymer particles to absorb water from the surrounding medium. Examples of organic and inorganic bases which can be used are ammonia, amines, sodium hydroxide, potassium hydroxide, and lithium hydroxide. The preferred base is ammonia. If the glass transition temperature (Tg) of the core or shell is above standard ambient temperature, it may be necessary to heat the core-shell polymers above their Tg, or to add a solvent to soften the polymer particles, in order to effect swelling.

Preferably the weight ratio between the aqueous phase to be treated to the core-shell polymer used is 10:1 or less.

The compositions which can be encapsulated by the core-shell polymers may contain an all-aqueous medium or a mixture of water with alcohols, ketones or other polar, miscible solvents, provided that the core-shell polymer is not dissolved by the solvent. The core-shell polymers can be used to solidify liquid waste products such as industrial effluents containing dissolved or suspended contaminants. The core-shell polymers are particularly useful in solidifying slurries of spent ion exchange resins, pigments such as titanium dioxide, and fillers such as clay, talc, calcium carbonate and silicon oxide. The core-shell polymers are also useful in accelerating the drying of cement and coating compositions comprising acrylic emulsions, vinyl acrylic emulsions, vinyl acetate emulsions, styrenated acrylic emulsions, styrene-butadiene-acrylonitrile emulsions or styrene emulsions or mixtures thereof. Further, the core-shell polymers can be used to encapsulate pesticides, fungicides, and fire retardants, for example.

The following Examples illustrate the invention. All parts and percentages therein are by weight unless otherwise indicated.

### Example I

### Preparation of Core-Shell Polymer

Core-shell polymer was prepared by sequential emulsion polymerization as described in the above mentioned US-A-4,427,836. The composition of the core polymer was 5% butyl acrylate, 65% methyl methacrylate and 30% methacrylic acid. The composition of the shell polymer was 45% ethyl acrylate, 58.5% methyl methacrylate and 1.5% methacrylic acid. The ratio of core polymer to shell polymer was 1:7. The shell polymer had a glass transition temperature of 55°C. The final emulsion of core-shell polymer had a total solids of 48.4%.

### Solidification of Emulsion of Core-Shell Polymers

A two-ounce (57grams) sample of the core-shell polymer emulsion was neutralized at room temperature with 1.5 equivalents of ammonium hydroxide based on the total acid in the core-shell polymer. The total solids of the neutralized emulsion was 47.1%. The sample remained liquid and no swelling of the polymer particles was noticed. After the sample was placed in an oven at 60°C for 10 minutes, the polymer particles swelled to form a solid. After heating at 60°C for a total of one hour, the sample was removed from the oven and cooled to room temperature. The sample was observed to be a very hard, solid mass.

Another two-ounce (57grams) sample of the core-shell polymer emulsion from Example I was mixed with 4% 2,2,4-trimethyl-1,3-pentanediol monoisobutyrate (TPM) based on weight of polymer. When 1.5 equivalents of ammonium hydroxide were added at room temperature as above, the polymer particles swelled and the sample became too viscous to pour in approximately 2.5 minutes. After 36 hours at room temperature, the sample was a hard, friable solid.

Core-shell polymer was prepared as in the first paragraph above, except that the shell had a composition of 52% butyl acrylate, 46.5% methyl methacrylate and 1.5% methacrylic acid. After neutralization at room temperature with 1.5 equivalents of ammonium hydroxide, the polymer particles swelled and the sample became non-pourable in about 10 seconds.

### Solidification/Encasement of Ion Exchange Beads

Spent ion exchange beads were deactivated by adding sodium hydroxide until they were completely quenched. The beads were then rinsed with water and filtered using a Buchner funnel. The final ion exchange beads contained approximately 50% water. Next, 50 grams of the ion exchange beads were added to 50 grams of the core-shell polymer emulsion from the first paragraph above and mixed thoroughly. This mixture was neutralized with 1.5 equivalents of ammonium hydroxide and no swelling of the polymer particles occurred. The mixture was then placed in an oven at 60°C for one hour and cooled to room temperature. The mixture had become a very hard, solid mass with the ion exchange beads encased therein.

### Example II

To the core-shell polymer emulsion from Example I (first paragraph) was added 4% (based on weight of polymer) of TPM to lower the Tg of the polymer. 50 grams of the polymer emulsion were mixed with 50 grams of the ion exchange bead treated as in Example I (last paragraph). This mixture was then neutralized with 1.5 equivalents of ammonium hydroxide at room temperature. The mixture was too viscous to pour after about 2 minutes and was a very hard solid mass after one week.

### Example III

Following the procedures from Example II, ion exchange beads were mixed with the core-shell polymer emulsion from Example I, except that 8% of TPM was used. The mixture was neutralized with a mixed base of 0.5 equivalents of ammonium hydroxide and 1.0 equivalents of sodium hydroxide. The mixture solidified to form a hard, solid mass after standing over night at room temperature.

### Example IV

### Encasement of Sand Granules

50 grams of the core-shell polymer emulsion from Example I were mixed with 100 grams of dry 20 mesh sand. The mixture was then neutralized with 1.5 equivalents of ammonium hydroxide and placed in an oven at 60°C. The mixture was stirred frequently to suspend the sand granules. As the temperature of the mixture approached 50°C, the viscosity increased sharply. The mixture was kept in the oven for one hour and cooled to room temperature. The mixture was a hard solid mass with the sand granules encased therein.

### Example V

### Solidification/Encasement of Talc Slurry

50 grams of the core-shell polymer emulsion from Example I were mixed with 100 grams of a 50% talc in water slurry. The mixture was neutralized with 1.5 equivalents of ammonium hydroxide and placed in an oven at 60°C for one hour. The mixture was then cooled to room temperature. The mixture was a hard solid mass with the talc particles encased therein.

### Example VI

### Use of Core-Shell Polymer As Drying Enhancer for Roof Mastic

Core-shell polymer was prepared by sequential emulsion polymerization as in Example I. The core polymer had a composition of 5% butyl acrylate, 65% methyl methacrylate and 30% methacrylic acid. The shell consisted of two stages, with the first stage having a composition of 40% ethyl acrylate, 58.5% methyl methacrylate and 1.5% methacrylic acid and the second stage having a composition of 90% butyl acrylate, 8% methyl methacrylate and 2% methacrylic acid. The weight ratio of core to first stage shell to second stage shell was 1:2:3. The core-shell polymer emulsion was blended with an acrylic roof mastic formulation (given in Table I below) at a weight ratio of 1:4. A control blend was prepared using a bimodal acrylic emulsion (LC-67 from Rohm and Haas Co.) outside the scope of the invention in place of the core-shell polymer emulsion. Both blends were neutralized with ammonium hydroxide and 30-mil films were cast on glass plates. The control film was dry on the surface in approximately one hour, but the inside of the film remained soft. The film containing the core-shell polymer was dry throughout the film in approximately 15 minutes.

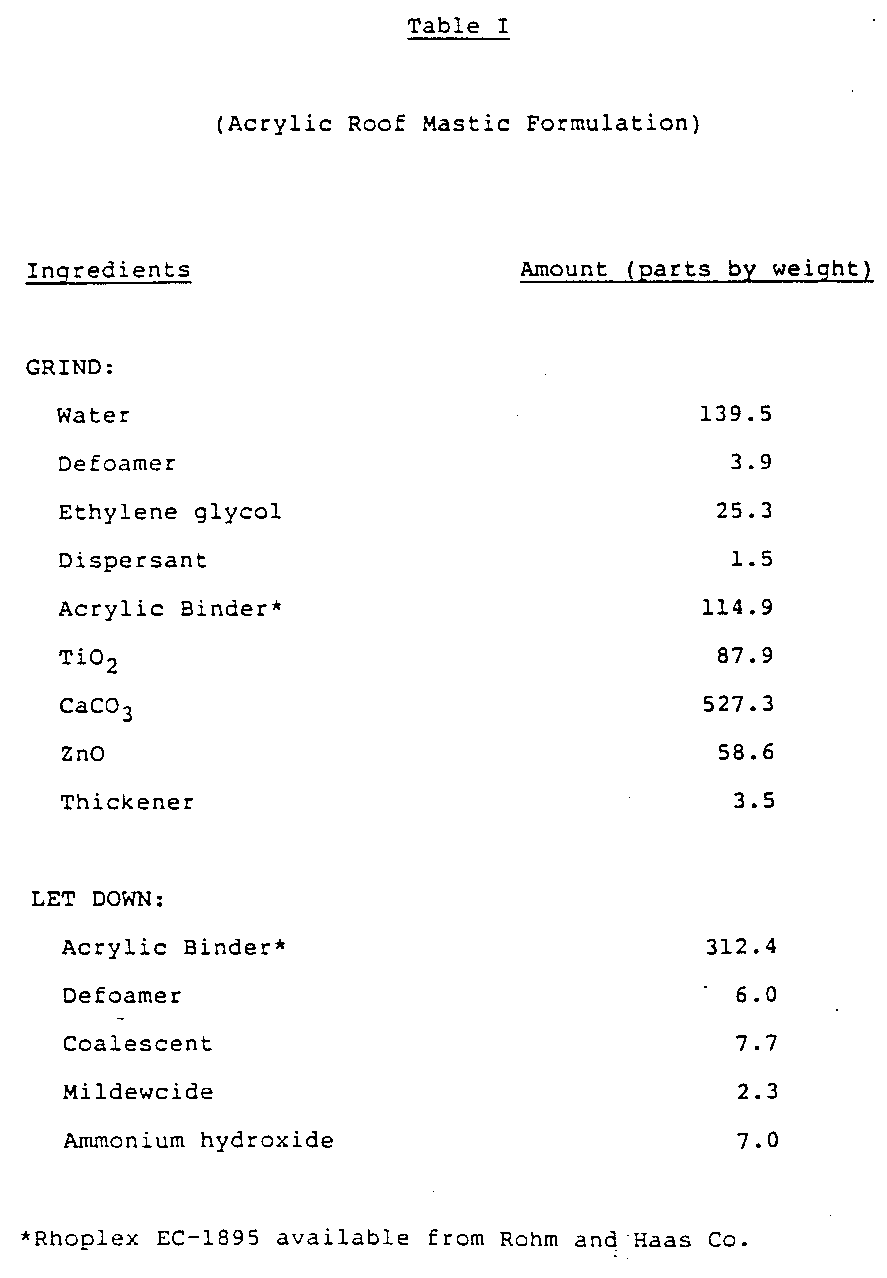

### Example VII

### Use of Core-Shell Polymer in Cement

In this example 50 grams of core-shell polymer emulsion from Example I were added to 100 grams of a sand/portland cement mix (3/1). In order to stabilize the polymer emulsion to the divalent ions of the cement, 1% soap (Triton X-405 from Rohm and Haas Co.) was added to the emulsion. 1.5 equivalents of ammonium hydroxide was added to the mixture and no swelling was observed. The sample was placed in a 60°C oven and heated. During the heating period the sample was stirred frequently to suspend the solid particles. As the temperature of the mixture approached the Tg of the polymer (50°C), the viscosity increased dramatically and stirring was not necessary to keep the mixture relatively homogeneous. The sample was kept in the oven for one hour and completely solidified. A control using an acrylic emulsion outside the scope of the invention was run at the same time. This control sample did not solidify during the one-hour period in the oven.

### Example VIII

### Encapsulation of Pesticide

Core-shell polymer was prepared as described in Example VI.

The core had a composition of 5% butyl acrylate, 65% methyl methacrylate and 30% methacrylic acid. The first-stage shell had a composition of 40 % ethyl acrylate, 58.3% methyl methacrylate, 1.5% methacrylic acid and 0.2% allyl methacrylate. The second-stage shell had a composition of 66% ethyl acrylate, 32.5% methyl methacrylate and 1.5% methacrylic acid. The weight ratio of core to first-stage shell to second-stage shell was 1:4:6. The core-shell polymer emulsion had a total solids of 50%.

12 grams of the core-shell polymer emulsion was neutralized with 1.5 equivalents of ammonium hydroxide and mixed with 180 mg of pesticide (Skane M-8 available from Rohm and Haas Co.). The mixture was poured into a 1 oz. (24 gram) vial and heated at 60°C in an oven for 15 minutes. After cooling to room temperature, the mixture was a solid mass containing Skane M-8 encapsulated therein. The final solid mass was tested for release of the encapsulated pesticide into an aqueous medium and compared to a control sample of pesticide which was not encapsulated. The encapsulated pesticide had a relative release rate which was constant and approximately 4.1% of the release rate for the unencapsulated control sample.

## Claims

1. A method of solidifying or encapsulating a waste composition containing a substantially continuous aqueous phase and dissolved or suspended materials, comprising uniformly incorporating into the composition polymer particles having a core component and a shell component, wherein a) the core component is an emulsion polymer of a monoethylenically unsaturated core monomer, at least 5% by weight of the core monomer having a carboxylic acid group, b) the shell component is an emulsion polymer prepared by polymerizing in the presence of the core component a monoethylenically unsaturated shell monomer, less than 10% by weight of the shell monomers having a carboxylic acid group, c) the shell component has a glass transition temperature from -40°C to 100°C, and the amount of the shell monomer having a carboxylic acid group is less than one third of the amount thereof in the core monomer, d) the weight ratio of the core component to the shell component is from 1:3 to 1:20, and e) the shell component is permeable to organic or inorganic bases; and neutralizing the polymer particles by incorporating into the composition an organic or inorganic base to swell the polymer particles and to absorb into the polymer particles substantially all the aqueous phase.

2. A method according to Claim 1 wherein at least 10% by weight of the core monomers have a carboxylic acid group.

3. A method according to Claim 1 wherein at least 30% by weight of the core monomers have a carboxylic acid group.

4. A method according to any preceding claim wherein the core monomers having a carboxylic acid group are acrylic acid, methacrylic acid, acryloxypropionic acid, methacryloxy-propionic acid, acryloxyacetic acid, methacryloxyacetic acid, monomethyl acid maleate, monomethyl acid itaconate, crotonic acid, aconitic acid, maleic acid, maleic anhydride, fumaric acid, monomethyl fumarate, and/or methacrylic anhydride.

5. A method according to any preceding claim wherein less than 5% by weight of the shell monomers have a carboxylic acid group.

6. A method according to any preceding claim wherein the weight ratio of the core component to the shell component is from 1:4 to 1:10.

7. A method according to any preceding claim wherein the base is ammonia, an amine, sodium hydroxide, potassium hydroxide, and/or lithium hydroxide.

8. A method according to any preceding claim wherein the weight ratio of the aqueous phase to the polymer particles is 10:1 or less.

9. A method according to any preceding claim wherein the composition comprises an acrylic emulsion, vinyl acrylic emulsion, vinyl acetate emulsion, styrenated acrylic emulsion, styrene-butadiene-acrylonitrile emulsion and/or a styrene emulsion.

10. A method according to any preceding claim wherein said composition contains an ion exchange resin, a biologically-active material, cement, a solid filler, clay, titanium dioxide, calcium carbonate, silicon oxide, or a fire retardant.

## Patentansprüche

1. Verfahren zum Verfestigen oder Verkapseln einer Abfallzusammensetzung, enthaltend eine im wesentlichen kontinuierliche wässrige Phase und gelöste oder suspendierte Materialien, bei dem in die Zusammensetzung Polymerpartikel mit einer Kernkomponente und einer Hüllkomponente gleichmäßig eingebracht werden, worin (a) die Kernkomponente ein Emulsionspolymer eines monoethylenisch ungesättigten Kernmonomers ist, wobei mindestens 5 Gew.-% des Kernmonomers eine Carbonsäuregruppe haben, (b) die Hüllkomponente ein Emulsionspolymer ist, hergestellt durch Polymerisierung eines monoethylenisch ungesättigten Hüllmonomers in Gegenwart der Kernkomponente, wobei weniger als 10 Gew.-% der Hüllmonomere eine Carbonsäuregruppe haben, (c) die Hüllkomponente eine Glasumwandlungstemperatur von -40°C bis 100°C hat, und die Menge des eine Carbonsäuregruppe aufweisenden Hüllmonomers weniger als 1/3 der Menge davon in dem Kernmonomer ist, (d) das Gewichtsverhältnis der Kernkomponente zu der Hüllkomponente 1:3 bis 1:20 ist, und (e) die Hüllkomponente für organische oder anorganische Basen permeabel ist, und die Polymerpartikel durch das Einbringen einer organischen oder anorganischen Base in die Zusammensetzung neutralisiert werden, wodurch die Polymerpartikel gequollen werden und im wesentlichen die gesamte wässrige Phase in die Polymerpartikel absorbiert wird.

2. Verfahren nach Anspruch 1, worin mindestens 10 Gew.-% der Kernmonomere eine Carbonsäuregruppe haben.

3. Verfahren nach Anspruch 1, worin mindestens 30 Gew.-% der Kernmonomere eine Carbonsäuregruppe haben.

4. Verfahren nach einem der vorhergehenden Ansprüche, worin die eine Carbonsäuregruppe aufweisenden Kernmonomere Acrylsäure, Methacrylsäure, Acryloxypropionsäure, Methacryloxypropionsäure, Acryloxyessigsäure, Methacryloxyessigsäure, Monomethylsäuremaleat, Monomethylsäureitaconat, Crotonsäure, Akonitsäure, Maleinsäure, Maleinsäureanhydrid, Fumarsäure, Monomethylfumarat und/oder Methacrylsäureanhydrid sind.

5. Verfahren nach einem der vorhergehenden Ansprüche, worin weniger als 5 Gew.-% der Hüllmonomere eine Carbonsäuregruppe haben.

6. Verfahren nach einem der vorhergehenden Ansprüche, worin das Gewichtsverhältnis der Kernkomponente zu der Hüllkomponente 1:4 bis 1:10 beträgt.

7. Verfahren nach einem der vorhergehenden Ansprüche, worin die Base Ammoniak, ein Amin, Natriumhydroxid, Kaliumhydroxid und/oder Lithiumhydroxid ist.

8. Verfahren nach einem der vorhergehenden Ansprüche, worin das Gewichtsverhältnis der wässrigen Phase zu den Polymerpartikeln 10:1 oder weniger beträgt.

9. Verfahren nach einem der vorhergehenden Ansprüche, worin die Zusammensetzung eine Acrylsäureemulsion, Vinylacrylsäureemulsion, Vinylacetatemulsion, styrolisierte Acrylsäureemulsion, Styrol-Butadien-Acrylonitrilemulsion und/oder eine Styrolemulsion umfaßt.

10. Verfahren nach einem der vorhergehenden Ansprüche, worin die Zusammensetzung ein Ionenaustauschor-Harz, ein biologisch-aktives Material, Zement, einen Festfüllstoff, Ton, Titandioxid, Calciumcarbonat, Silikonoxid oder ein feuerhemmendes Material enthält.

## Revendications

1. Procédé de solidification ou d'encapsulation d'une composition de déchets contenant une phase aqueuse essentiellement continue et des matières dissoutes ou en suspension, comprenant l'incorporation uni forme dans la composition de particules de polymère renfermant un constituant noyau et un constituant enveloppe, dans lequel a) le constituant noyau est un polymère en émulsion d'un monomère de noyau à insaturation monoéthylénique, au moins 5% en poids du monomère de noyau possédant un groupe acide carboxylique, b) le constituant enveloppe est un polymère en émulsion préparé par polymérisation en présence du constituant noyau d'un monomère d'enveloppe à insaturation monoéthylénique, moins de 10% en poids des monomères d'enveloppe possédant un groupe acide carboxylique, c) le constituant enveloppe possède une température de transition vitreuse de -40°C à 100°C et la quantité du monomère d'enveloppe possédant un groupe acide carboxylique est inférieure au tiers de sa quantité dans le monomère de noyau, d) le rapport pondéral du constituant noyau au constituant enveloppe est de 1 : 3 à 1 : 20, et e) le constituant enveloppe est perméable aux bases organiques ou minérales; et on neutralise des particules de polymère par incorporation dans la composition d'une base organique ou minérale servant à faire gonfler les particules de polymère et à absorber dans les particules de polymère essentiellement toute la phase aqueuse.

2. Procédé selon la revendication 1, dans lequel au moins 10% en poids des monomères de noyau possèdent un groupe acide carboxylique.

3. Procédé selon la revendication 1, dans lequel au moins 30% en poids des monomères de noyau possèdent un groupe acide carboxylique.

4. Procédé selon l'une quelconque des revendications précédentes, dans lequel les monomères de noyau possédant un groupe acide carboxylique sont l'acide acrylique, l'acide méthacrylique, l'acide acryloxypropionique, l'acide méthacryloxypropionique, l'acide acryloxyacétique, l'acide méthacryloxyacétique, le maléate acide de monométhyle, l'itaconate acide de monométhyle, l'acide crotonique, l'acide aconitique, l'acide maléique, l'anhydride maléique, l'acide fumarique, le fumarate de monométhyle et/ou l'anhydride méthacrylique.

5. Procédé selon l'une quelconque des revendications précédentes, dans lequel moins de 5% en poids des monomères d'enveloppe possèdent un groupe acide carboxylique.

6. Procédé selon l'une quelconque des revendications précédentes, dans lequel le rapport pondéral du constituant noyau au constituant enveloppe est de 1 : 4 à 1 : 10.

7. Procédé selon l'une quelconque des revendications précédentes, dans lequel la base est l'ammoniac, une amine, l'hydroxyde de sodium, l'hydroxyde de potassium et/ou l'hydroxyde de lithium.

8. Procédé selon l'une quelconque des revendications précédentes, dans lequel le rapport pondéral de la phase aqueuse aux particules de polymère est inférieur ou égal à 10 : 1.

9. Procédé selon l'une quelconque des revendications précédentes, dans lequel la composition comprend une émulsion acrylique, une émulsion vinylacrylique, une émulsion d'acétate de vinyle, une émulsion acrylique styrénée, une émulsion de styrène-butadiène-acrylonitrile et/ou une émulsion de styrène.

10. Procédé selon l'une quelconque des revendications précédentes, dans lequel ladite composition contient une résine échangeuse d'ions, une matière biologiquement active, un ciment, une charge solide, une argile, du dioxyde de titane, du carbonate de calcium, de l'oxyde de silicium ou un ignifugeant.
